# EUROPÄISCHE PATENTANMELDUNG

(11) **EP 1 867 423 A1**
(43) Veröffentlichungstag der Anmeldung: **19.12.2007**
(21) Anmeldenummer: 06012072.2
(22) Anmeldetag: 12.06.2006
(51) Int. Cl.: B23K 1/00, B23P 6/00, F01D 5/00, B23K 1/19, B23K 35/00, B23K 35/02, B23K 35/30, B23K 101/00

(54) **Verfahren zum Reparieren eines Bauteils durch Verlöten eines mit Lot beschichteten Bleches**

(71) Anmelder: SIEMENS AKTIENGESELLSCHAFT, 80333 München (DE)
(72) Erfinder: Heinecke, Brigitte, Dr., 45468 Mülheim an der Ruhr (DE); Vosberg, Volker, Dr., 45476 Mülheim an der Ruhr (DE)

(57) **Zusammenfassung**

Die vorliegende Erfindung betrifft ein Verfahren zum Reparieren eines Bauteils (7), bei dem ein Blech (1), das eine Schicht (5) aus Lot aufweist, in eine zu reparierende Stelle des Bauteils (7) angeordnet wird, und das Blech (1) mit dem Bauteil (7) verlötet wird.

## Beschreibung

Die vorliegende Erfindung betrifft ein Verfahren zum Reparieren eines Bauteils, insbesondere eines Gasturbinenbauteils.

Bauteile, wie beispielsweise Bauteile einer Gasturbine, sind im Betrieb Bedingungen ausgesetzt, die zu Vertiefungen und Rissen in den Bauteilen führen. Im Rahmen der Instandsetzung von geschmiedeten oder gegossenen Bauteilen, insbesondere Heißgaskomponenten von Gasturbinen, kann es erforderlich werden, angegriffenen bzw. abgetragenen Grundwerkstoff wieder zu restaurieren.

Das Auftragen von Grundwerkstoff wird durch verschiedene Verfahren wie Auftragschweißen, Flammspritzen oder Auftraglöten mit Paste bzw. Pre-Sintered-Preforms (PSP) erreicht. Durch derartige Verfahren werden jedoch die mechanischen Eigenschaften des Bauteils beeinträchtigt. Auftragsschweißen ist zudem in mechanisch höher beanspruchten Bereichen einer Gasturbine nicht einsetzbar, weil die Bildung von Heizrissen an Nickelbasiswerkstoffen bis jetzt noch nicht vermeidbar ist.

Zu reparierende Vertiefungen und Risse in den Bauteilen können weiterhin mit einem Lot aufgefüllt werden. Üblicherweise verwendete Lote weisen jedoch geringere mechanische Kennwerte auf als das Grundmaterial des Bauteils. Die mechanischen Eigenschaften sind durch das Lot limitiert.

Weiterhin können die durch die Betriebsbeanspruchung verringerten Wandstärken bzw. gebildeten Vertiefungen an Gasturbinenbauteilen durch thermisches Spritzen von artgleichen Werkstoffen (zum Beispiel Vakuumplasmaspritzen oder Hochgeschwindigkeitsflammspritzen) in der Kontur wieder hergestellt werden. Wegen des quasi superplastischen (Kriech) Verhaltens dieser Schichten unter Betriebsbeanspruchung tragen sie nicht zur Festigkeit des Bauteils bei.

Alternativ kann ein Bauteil durch das Anfügen speziell hergestellter Passteile (Coupon-Repair) durch Schweißen oder Löten repariert werden. Eine derartige Anwendung ist durch die beschränkte Herstellbarkeit derartiger Passteile stark eingeschränkt.

Gegenüber dem Stand der Technik ist es eine Aufgabe der vorliegenden Erfindung, ein Verfahren zum Reparieren eines Bauteils zur Verfügung zu stellen, mit dem ein Bauteil flexibel, sicher, schnell und ohne Beeinträchtigung seiner mechanischen Eigenschaften repariert werden kann.

Die Aufgabe wird durch ein Verfahren nach Anspruch 1 gelöst. Die abhängigen Ansprüche enthalten vorteilhafte Ausgestaltungen der vorliegenden Erfindung.

In einem erfindungsgemäßen Verfahren zum Reparieren eines Bauteils, insbesondere eines Turbinenbauteils wird ein Blech in einer zu reparierende Stelle des Bauteils angeordnet. Das Blech weist eine Schicht auf Lot auf, mittels der das Blech mit dem Bauteil verlötet werden kann. Das Blech kann insbesondere aus dem Grundwerkstoff des Bauteils hergestellt sein. Als Lot kann ein niedrig schmelzendes Lot, insbesondere unter Beimischung eines Flussmittels zur Anwendung kommen, oder ein hoch schmelzendes Lot, wobei Letzterem ein Schmelzpunkterniedriger, bspw. Bor zugemischt ist.

Durch die Verwendung eines Blechs, das lediglich eine Schicht aus Lot aufweist, kann der Gehalt an typischen Lotzusätzen wie Bor, die die mechanischen Eigenschaften wie auch die Oxidationsbeständigkeit des zu reparierenden Bauteils verringern, in der reparierten Stelle klein gehalten werden. Gleichzeitig wird durch die Schicht aus Lot eine feste Anbringung des Blechs an das zu reparierende Bauteil gewährleistet. Gegenüber dem im Stand der Technik verwendeten Schweißverfahren werden der lokale Wärmeeintrag und Probleme mit der Schweißbadsicherung verringert. Gegenüber dem Auftraglöten wird die Menge an Lot und Flussmitteln und - bei Verwendung eines hoch schmelzenden Lotes - der Eintrag an Schmelzpunkterniedrigern wie Bor in die zu reparierende Stelle verringert. Flussmittel und Schmelzpunkterniedriger können sowohl die Beschichtung als auch die mechanischen Eigenschaften der Komponenten beeinträchtigen. Gegenüber einem Coupon-Repair wird durch die Anpassbarkeit des Blechs eine sehr viel größere Flexibilität der Anwendung erreicht. Es muss nicht für jede Beschädigung ein Passstück hergestellt werden. Stattdessen können ein oder mehrere Standardbleche durch Verformen an die zu reparierende Stelle angepasst werden.

In einer vorteilhaften Weiterbildung des erfindungsgemäßen Verfahrens wird die Schicht aus Lot vor dem Anordnen des Blechs an der zu reparierenden Stelle einer Wärmebehandlung unterworfen. Bei der Wärmebehandlung wird das Lotpulver so geformt, dass ein minimaler Zusammenhalt der Lotpulverpartikel gegeben ist und sich das Lotpulver verdichtet und verfestigt, sodass die Schicht aus Lot stabilisiert wird. Vorteilhaft ist das Blech einseitig mit einer dünnen, gleichmäßigen Lotschicht überzogen, sodass der Lotgehalt, und damit der Gehalt an Flussmittel im Reparaturbereich möglichst gering, aber ausreichend ist, um eine sichere Verlötung des Blechs mit dem Bauteil zu gewährleisten.

In einer Weiterbildung des erfindungemäßen Verfahrens wird das Blech an die Geometrie der zu reparierenden Stelle angepasst. D5ies kann beispielsweise durch Verformen des Blechs erreicht werden. Da Bleche mit geringer Dicke leichter verformbar sind als Bleche mit größerer Dicke, ist die Dicke des in dem erfindungsgemäßen Verfahren eingesetzten Blechs vorteilhaft gering. Falls erforderlich, können mehrere Bleche, die jeweils eine Schicht aus Lot aufweisen, einzeln an die zu reparierende Stelle des Bauteils angepasst und gestapelt werden.

Vorteilhaft werden das Bauteil und das Blech zum Verlöten einer Lötwärmebehandlung unterworfen. Während der Lötwärmebehandlung wird das Lot aufgeschmolzen. Nach Beendigung der Lötwärmebehandlung kühlt das Lot unter Verfestigung der Lotpartikel ab. Dadurch wird das Blech mit dem Bauteil fest verbunden, sodass sich das Blech während des Betriebs des Bauteils, insbesondere einer Gasturbine, nicht nach der Reparatur löst. Wenn als Lot ein niedrig schmelzendes Lot unter Verwendung eines Flussmittels zur Anwendung kommt, umfasst die Lötwärmebehandlung lediglich eine Behandlungsstufe. Kommt dagegen ein hoch schmelzendes Lot unter Verwendung eines Schmelzpunkterniedrigers zur Anwendung, so erfolgt eine mehrstufige Lötwärmebehandlung. Diese umfasst eine erste Wärmebehandlung bei einer Temperatur oberhalb der Schmelztemperatur des Lotes, bei der das Lot mit dem erniedrigten Schmelzpunkt aufschmilzt. Auf diese folgt als eine zweite Wärmebehandlung eine Diffusionswärmebehandlung bei einer Temperatur unterhalb der Lösungsglühtemperatur zum Austreiben des Schmelzpunkterniedrigers durch Diffusion. Darauf erfolgt eine dritte Wärmebehandlung bei einer Temperatur die sich zum Einstellen des Gefüges des Grundwerkstoffes im Bereich der Lötstelle eignet und in der kein erneutes Anschmelzen des Lotes erfolgt.

In einer vorteilhaften Ausgestaltung des erfindungsgemäßen Verfahrens werden das Bauteil und das Blech vor dem Verlöten mittels Schweißpunkten fixiert, bspw. unter Verwendung eines Punktschweißverfahrens.

Vorteilhaft wird bei dem Verlöten des Bauteils mit dem Blech eine Lotpaste in mindestens einem Kantenbereich des Bleches verwendet. Die Lotpaste dient dazu, eventuell auftretende Lücken bzw. Zwischenräume zwischen dem Kantenbereich des Blechs und der zu reparierenden Stelle des Bauteils zu füllen, sodass nach dem Verlöten eine gleichmäßige, feste Verbindung zwischen dem Blech und dem Bauteil entlang des gesamten Umfangs des Blechs erhalten wird.

Zum Aufbauen von Wandstärke mit dünnen Blechen, können mehrere Bleche mit einer Schicht aus Lot einzeln an die zu reparierende Stelle angepasst und gestapelt werden.

Das mit dem erfindungsgemäßen Verfahren zu reparierende Bauteil kann insbesondere ein Turbinenbauteil, etwa eine Turbinenschaufel, sein. Die zu reparierende Stelle ist insbesondere eine Austrittskante der Turbinenschaufel. Austrittskanten von Turbinenschaufeln sind besonders anfällig für Verschleiß und Risse. Alternativ kann das erfindungsgemäße Verfahren zum Aufbauen von Wandstärken, insbesondere bei Gasturbinenkomponenten, eingesetzt werden.

Weitere Merkmale, Eigenschaften und Vorteile der vorliegenden Erfindung ergeben sich aus der nachfolgenden Beschreibung von Ausführungsbeispielen unter Bezugnahme auf die beiliegenden Zeichnungen.
Fig. 1 zeigt beispielhaft eine Gasturbine in einem Längsteilschnitt.
Fig. 2 zeigt die perspektivische Ansicht einer Laufschaufel oder einer Leitschaufel einer Strömungsmaschine.
Fig. 3 zeigt eine Brennkammer einer Gasturbine.
Fig. 4a bis Fig. 4e zeigen ein erstes Ausführungsbeispiel für das erfindungsgemäße Verfahren.
Figuren 5a bis 5f zeigen ein zweites Ausführungsbeispiel für das erfindungsgemäße Verfahren

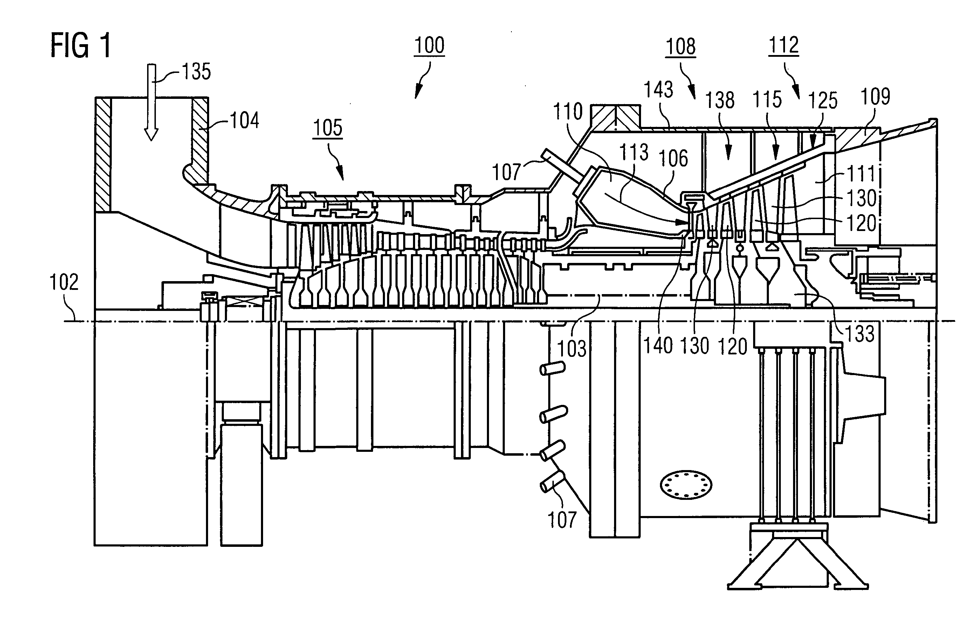

Die Figur 1 zeigt beispielhaft eine Gasturbine 100 in einem Längsteilschnitt. Die Gasturbine 100 weist im Inneren einen um eine Rotationsachse 102 drehgelagerten Rotor 103 mit einer Welle 101 auf, der auch als Turbinenläufer bezeichnet wird.

Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.

Die Ringbrennkammer 110 kommuniziert mit einem beispielsweise ringförmigen Heißgaskanal 111. Dort bilden beispielsweise vier hintereinander geschaltete Turbinenstufen 112 die Turbine 108. Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind. An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet. Um den dort herrschenden Temperaturen standzuhalten, können diese mittels eines Kühlmittels gekühlt werden.

Ebenso können Substrate der Bauteile eine gerichtete Struktur aufweisen, d.h. sie sind einkristallin (SX-Struktur) oder weisen nur längsgerichtete Körner auf (DS-Struktur).

Als Material für die Bauteile, insbesondere für die Turbinenschaufel 120, 130 und Bauteile der Brennkammer 110 werden beispielsweise eisen-, nickel- oder kobaltbasierte Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierungen Teil der Offenbarung.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

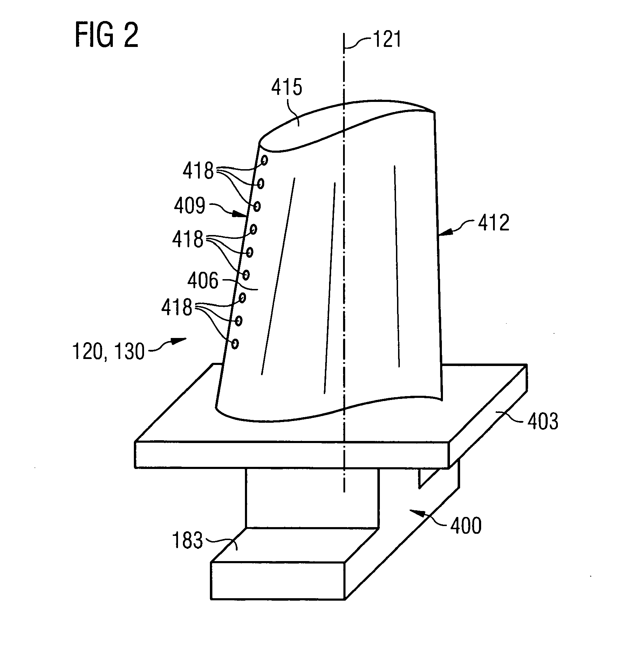

Die Figur 2 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf. Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt). Der Schaufelfuß 183 ist beispielsweise als Hammerkopf ausgestaltet. Andere Ausgestaltungen als Tannenbaum- oder Schwalbenschwanzfuß sind möglich.

Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.

Solche Superlegierungen sind beispielsweise aus der EP 1 204 776 B1, EP 1 306 454, EP 1 319 729 A1, WO 99/67435 oder WO 00/44949 bekannt; diese Schriften sind bzgl. der chemischen Zusammensetzung der Legierung Teil der Offenbarung. Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind. Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt. Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures). Solche Verfahren sind aus der US-PS 6,024,792 und der EP 0 892 090 A1 bekannt; diese Schriften sind bzgl. des Erstarrungsverfahrens Teil der Offenbarung.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen. Die Dichte liegt vorzugsweise bei 95% der theoretischen Dichte. Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

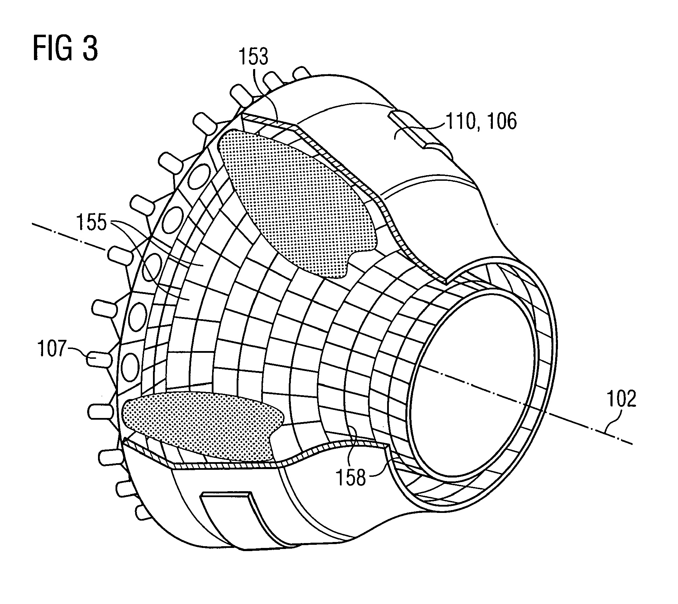

Die Figur 3 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.

Diese Schutzschichten können ähnlich der Turbinenschaufeln sein, also bedeutet beispielsweise MCrAlX: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1, die bzgl. der chemischen Zusammensetzung der Legierung Teil dieser Offenbarung sein sollen.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Anschließend werden auch noch Risse in der Turbinenschaufel 120, 130 oder dem Hitzeschildelement 155 mittels des erfindungsgemäßen Verfahrens repariert. Danach erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

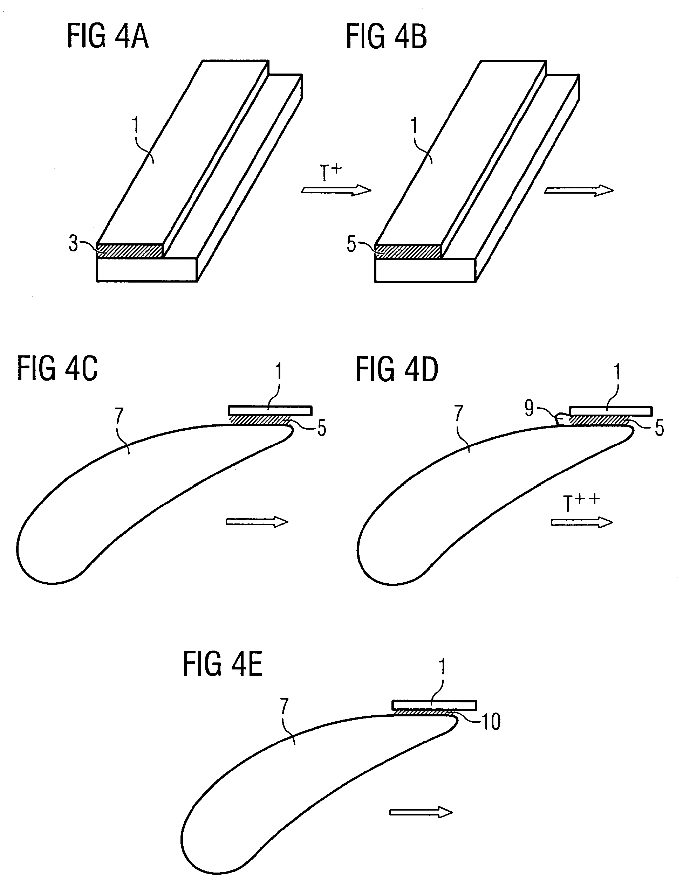

Ein erstes Ausführungsbeispiel für das erfindungsgemäße Verfahren ist in den Figuren 4a bis 4e dargestellt. In dem ersten Ausführungsbeispiel wird eine Austrittskante einer Turbinenschaufel wieder hergestellt.

In Fig. 4a ist ein Blech 1 gezeigt, das in einem Bereich, der auf ein zu reparierendes Bauteil aufgebracht werden soll, mit einer Schicht 3 aus Lot beschichtet ist. Das Lot liegt in Pulverform vor. Das Blech 1, das insbesondere aus dem Grundwerkstoff der Turbinenschaufel hergestellt sein kann, weist eine Dicke auf, die einer für Turbinenschaufeln typischen Austrittskantenwandstärke entspricht. D.h., das Blech 1 ist gerade noch dünn genug, um auf die Austrittskantenkontour angepasst werden zu können.

Das Blech 1 mit der Schicht 3 aus Lot wird einer Wärmebehandlung (T⁺) unterworfen. Dadurch wird auf dem Blech 1 eine vorgesinterte Schicht 5 aus Lot gebildet. Bei der Wärmebehandlung wird das Lotpulver so umgeformt, dass ein minimaler Zusammenhalt der Lotpulverpartikel gegeben ist und sich das Lotpulver verdichtet und verfestigt. Das Blech 1 mit der vorgesinterten Schicht 5 aus Lot ist in Fig. 4b dargestellt.

Das Blech 1 mit der vorgesinterten Schicht 5 aus Lot wird auf eine Turbinenschaufel 7 als zu reparierendem Bauteil angeordnet. Dabei wird nur derjenige Bereich des Blechs 1 mit der Turbinenschaufel 7 in Kontakt gebracht, der die vorgesinterte Schicht 5 aus Lot aufweist, wie in Fig. 4c gezeigt ist. Das Blech 1 wird mittels eines Punktschweißverfahrens unter Bildung von einigen Schweißpunkten (nicht dargestellt) an der Turbinenschaufel fixiert.

In den Kantenbereich des Blechs 1, der im Bereich der Turbinenschaufel 7 liegt, wird eine Lotpaste 9 derart eingebracht, dass zwischen dem Kantenbereich des Blechs 1 und der Turbinenschaufel 7 auftretende Lücken bzw. Zwischenräume aufgefüllt werden. Die Turbinenschaufel 7, auf der das Blech 1 sowie die Lotpaste 9 angeordnet sind, ist in Fig. 4d gezeigt.

Anschließend werden die Turbinenschaufel 7 und das Blech 1 einer Lötwärmebehandlung (T⁺⁺) derart unterworfen, dass das Blech 1 mit der Turbinenschaufel 7 verlötet wird. Durch die Lötwärmeeinwirkung werden die vorgesinterte Schicht 5 aus Lot und die Lotpaste 9 aufgeschmolzen und beim anschließenden Abkühlen nach der Lotwärmebehandlung unter Bildung einer stoffschlüssigen Verbindung 10 zwischen der Turbinenschaufel 7 und den Blech 1 verfestigt. Die reparierte, mit dem Blech 1 verlötete Turbinenschaufel 7 ist in Fig. 4e gezeigt.

Im vorliegenden Ausführungsbeispiel kommt ein Lot mit bspw. Bor als Schmelzpunkterniedriger zum Einsatz. Die Wärmebehandlung (T⁺⁺) umfasst daher drei Stufen. In der ersten Stufe ist die Temperatur so gewählt, dass das Lot mit dem erniedrigten Schmelzpunkt aufschmilzt. Die zweite Stufe ist eine Diffusionswärmebehandlung bei einer Temperatur unterhalb der Lösungsglühtemperatur. In dieser Wärmebehandlungsstufe wird der Schmelzpunkterniedriger durch Diffusion ausgetrieben. Darauf folgt die dritten Stufe der Lötwärmebehandlung bei einer Temperatur, die sich zum Einstellen des Gefüges des Grundwerkstoffes im Bereich der Lötstelle eignet. Wegen der nun diffusen Verteilung des Schmelzpunkterniedrigers auf Grund der Austreibens kann die dritte Stufe ohne erneutes Anschmelzen des Lotes erfolgen.

Anstatt eines hoch schmelzenden Lotes, das einen Schmelzpunkterniedriger als Zusatz enthält, kann auch ein niedrig schmelzendes Lot in Verbindung mit einem Flussmittel auf dem höher schmelzenden Grundwerkstoff zum Einsatz kommen. In diesem Fall ist eine einstufige Lötwärmebehandlung ausreichend.

Durch die Verwendung eines Blechs 1 mit einer Schicht 5 aus Lot weist die an der Turbinenschaufel 7 wiederhergestellte Austrittskante im Vergleich zu einer mittels Auftragslöten reparierten Turbinenschaufel 7 nur einen geringen Gehalt an typischen Lotzusätzen wie Bor auf. Solche Lötzusätze können die mechanischen Eigenschaften wie auch die Oxidationsbeständigkeit der Lötstelle verringern.

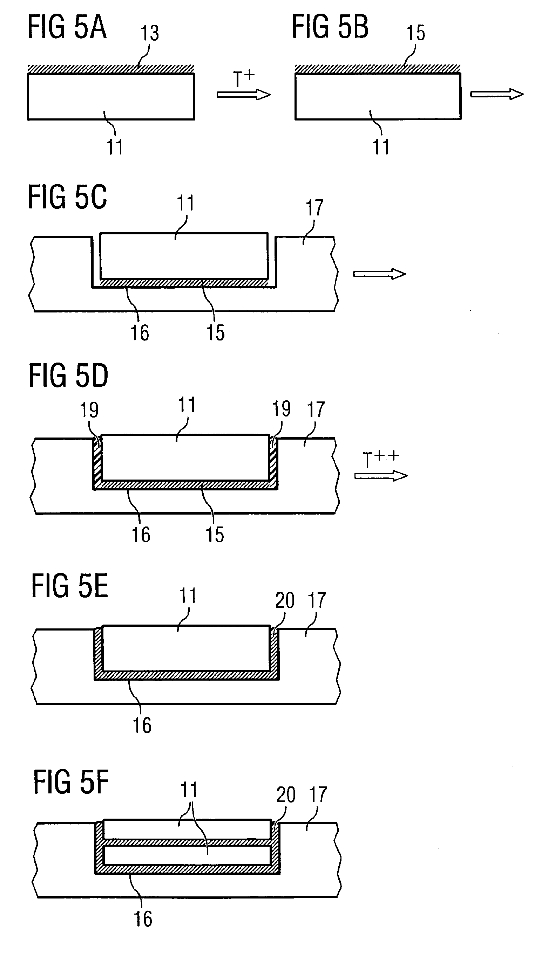

Ein zweites Ausführungsbeispiel für das erfindungsgemäße Verfahren ist in Fig. 5a bis 5f dargestellt. In dem zweiten Ausführungsbeispiel wird die Wand 17 eines Gasturbinenbauteils, bspw. einer Lauf- oder Leitschaufel oder eines Abdeckelements, repariert bzw. verstärkt.

In Fig. 5a ist ein Blech 11 gezeigt, das eine Schicht 13 aus Lot aufweist. Das Lot liegt in Pulverform vor. Vorteilhaft weist das Blech 11 eine vergleichbare Dicke wie die zu reparierende Gasturbinenwand auf.

Das Blech 11 mit der Schicht 13 aus Lot wird einer Wärmebehandlung (T⁺) unterworfen. Dadurch wird auf dem Blech 11 eine vorgesinterte Schicht 15 aus Lot gebildet. Das Blech 11 mit der vorgesinterten Schicht 15 aus Lot ist in Fig. 5b dargestellt.

Das Blech 11 mit der vorgesinterten Schicht 15 aus Lot wird in einer Vertiefung 16 der Wand 17 des zu reparierenden Bauteils angeordnet, wie in Fig. 5c gezeigt ist, und mit einigen wenigen Schweißpunkten dort fixiert.

In den Kantenbereich des Blechs 11 wird eine Lotpaste 19 derart eingebracht, dass zwischen der Wand 17 und dem Blech 11 keine Lücken bzw. Zwischenräume vorhanden sind. Die Wand 17, in deren Vertiefung 16 das Blech 11 sowie die Lotpaste 19 angeordnet sind, ist in Fig. 5d gezeigt.

Anschließend werden die Wand 17 und das Blech 11 einer Lötwärmebehandlung (T⁺⁺) derart unterworfen, dass das Blech 11 mit der Wand 17 zur Bildung einer stoffschlüssigen Verbindung 20 verlötet wird. Die reparierte, mit dem Blech 11 verlötete Wand 17 ist in Fig. 5e gezeigt.

Falls die Dicke des Bleches 11 nicht ausreicht, um die ursprüngliche Dicke der Wand 17 wieder herzustellen, werden mehrere Bleche 11 in der Vertiefung 16 übereinander gestapelt und dann mit der Wand 17 verlötet. Das in Verbindung mit den Figuren 5a bis 5e beschriebene Verfahren wird mit einem zweiten Blech 11 wiederholt. In Figur 5f ist die reparierte Wand 17 gezeigt, in deren Vertiefung 16 zwei Bleche 11 gestapelt angeordnet sind. Die Bleche 11 sind miteinander und mit der Wand 17 durch eine stoffschlüssige Verbindung 20 verbunden.

Obwohl in den beiden Ausführungsbeispiel nur ein Blech zur Reparatur des jeweiligen Bauteils eingesetzt wurde, können auch mehrere Bleche mit einer Schicht aus Lot einzeln angepasst und gestapelt werden.

## Patentansprüche

1. Verfahren zum Reparieren eines Bauteils (7, 17), bei dem ein Blech (1, 11), das eine Schicht (3, 5, 13, 15) aus Lot aufweist, an einer zu reparierenden Stelle des Bauteils (7, 17) angeordnet wird, und das Blech (1, 11) mit dem Bauteil (7, 17) verlötet wird.

2. Verfahren nach Anspruch 1, bei dem die Schicht (3, 13) aus Lot vor dem Anordnen des Blechs (1, 11) an der zu reparierenden Stelle einer Wärmebehandlung unterworfen wird.

3. Verfahren nach Anspruch 1 oder Anspruch 2, bei dem das Blech (1, 11) an die Geometrie der zu reparierenden Stelle angepasst wird.

4. Verfahren nach Anspruch 3, bei dem das Anpassen des Blechs (1, 11) an die Geometrie der zu reparierenden Stelle ein Verformen des Blechs (1, 11) umfasst.

5. Verfahren nach einem der Ansprüche 1 bis 4, bei dem das Verlöten des Blechs (1, 11) mit dem Bauteil (7, 17) unter Verwendung einer Lötwärmebehandlung des Bauteils (7, 17) mit dem daran angeordneten Blech (1, 11) erfolgt.

6. Verfahren nach Anspruch 5, bei dem ein hoch schmelzendes Lot mit einem Schmelzpunkterniedriger zur Anwendung kommt und die Lötwärmebehandlung eine erste Wärmebehandlung bei einer Temperatur oberhalb der Schmelztemperatur des Lotes, eine zweite Wärmebehandlung bei einer Temperatur unterhalb der Lösungsglühtemperatur und eine dritte Wärmebehandlung bei einer Temperatur die sich zum Einstellen des Gefüges des Grundwerkstoffes im Bereich der Lötstelle eignet und in der kein erneutes Anschmelzen des Lotes erfolgt, umfasst

7. Verfahren nach einem der Ansprüche 1 bis 6, bei dem das Blech (1, 11) vor dem Verlöten mittels Schweißpunkten an dem Bauteil (7, 17) fixiert wird.

8. Verfahren nach Anspruch 7, bei dem das Verlöten des Bauteils (7, 17) und des Blechs (1, 11) das Verwenden einer Lotpaste (9, 19) in mindestens einem Kantenbereich des Bleches (1, 11) umfasst.

9. Verfahren nach einem der vorstehenden Ansprüche, bei dem das Bauteil (7) eine Turbinenschaufel ist und die zu reparierende Stelle eine Austrittskante der Turbinenschaufel ist.

10. Verfahren nach einem der vorstehenden Ansprüche, bei dem auf dem Blech (11) mindestens ein weiteres Blech (11), das eine Schicht aus Lot aufweist, angeordnet und verlötet wird.
